Europäisches Patentamt

European Patent Office

Office européen des brevets

(19)

(11) Numéro de publication : **0 494 710 A2**

(12) # DEMANDE DE BREVET EUROPEEN

(21) Numéro de dépôt : **92200004.7**

(22) Date de dépôt : **03.01.92**

(51) Int. Cl.$^5$ : **G06K 7/08**

Numero de la priorité italienne : TO91A00007.

(30) Priorité : **10.01.91**

(43) Date de publication de la demande :
**15.07.92 Bulletin 92/29**

(84) Etats contractants désignés :
**CH DE ES FR GB IT LI MC**

(71) Demandeur : **GREEN BIT s.n.c. di Bargero Paolo & C.**
**Via Morghen 21**
**I-10143 Torino (IT)**

(72) Inventeur : **Bargero, Paolo**
**Via Sarre 6**
**I-10152 Torino (IT)**
Inventeur : **Lengo, Giuliano**
**Via Valvendra 21**
**I-24065 Lovere (Bergamo) (IT)**
Inventeur : **Lucisano, Franco**
**Via Morghen 21**
**I-10143 Torino (IT)**

(74) Mandataire : **Patrito, Pier Franco, Dr. Ing.**
**Cabinet PATRITO BREVETTI Via Don Minzoni 14**
**I-10121 Torino (IT)**

(54) **Carte intelligente pour la réception et la transmission d'informations, et son utilisation dans un système d'exploitation destructures polyvalentes.**

(57)  Une carte (S) pour la réception et la transmission d'informations, comportant des moyens de mémoire (ROM,RAM) et des moyens de communication par ondes électromagnétiques (A,CA,CS,OM), comprenant aussi un microprocesseur (MP) relié aux moyens de mémoire (ROM,RAM) et aux moyens de communication (CA,CS,OM), ainsi qu'une source d'énergie électrique (AL) pour l'alimentation des moyens de mémoire et de communication et du microprocesseur. La transmission de la carte (S) vers un système stationnaire a lieu de préférence en mode passif par modification de la réflectivité d'une antenne (A). La carte peut être utilisée pour garder des informations concernant un porteur et pour échanger ces informations, avec la possibilité de les modifier et de les compléter, en communication avec des postes de réception et de transmission stationnaires disposés en correspondance de passages physiques contrôlés par ces postes. L'intelligence et l'autonomie de la carte (S) autorisent l'exploitation de systèmes complexes ou polyvalents dont les postes peuvent être rangés dans un système hiérarchique qui assure la possibilité de fonctionnement autonome de portes ou de secteurs aussi dans le cas d'une interruption de la communication de réseau entre les postes.

FIG.3

EP 0 494 710 A2

La présente invention a pour objet une carte pour la réception et la transmission d'informations, comportant des moyens de mémoire et des moyens de communication par ondes électromagnétiques, ainsi que son utilisation dans un système d'exploitation.

On connait des cartes d'identifications pourvues d'une mémoire dans laquelle on peut enregistrer certaines informations, et pourvues de moyens de communications par ondes électromagnétiques qui offrent à un ou plusieurs postes stationnaires de réception et de transmission la possibilité de lire les informations enregistrées dans la mémoire d'une carte afin de commander certaines fonctions sur la base de ces informations. Par exemple, une telle carte peut être utilisée pour autoriser l'ouverture d'un passage physique dont l'accès doit être permis seulement à des personnes préétablies identifiées par une carte correspondante, ou bien pour enregistrer le passage d'un certain véhicule dans un poste de péage d'autoroute afin d'imputer un débit à un compte concernant les péages, et ainsi de suite. Les cartes connues de ce genre se limitent à émettre un signal comportant l'information enregistrée lorsqu'elles sont sollicitées par la réception du signal emis par un poste stationnaire de réception et de transmission, et elles sont statiques par rapport à l'information, dans le sens que leur mémoire reçoit initialement certaines informations lesquelles pourront ensuite être lues par les postes stationnaires de réception et de transmission, mais qui demeurent inchangées pendant toute la période d'usage de la carte par un certain usager. Bien entendu, par des opérations appropriées on peut remplacer les informations enregistrées par d'autres informations, lorsque la carte est retirée d'un usager et personnalisée pour un autre usager, ou bien lorsque les informations concernant l'usager doivent être modifiées, mais les informations enregistrées ne peuvent pas être modifiées ou complétées par d'autres informations dans une action réciproque avec les postes stationnaires de réception et de transmission qui lisent les informations enregistrées dans la carte. Cette staticité des informations enregistrées dans une carte limite son usage à des systèmes d'exploitation relativement simples, et en tous cas l'appréciation des informations enregistrées est entièrement confiée au système d'exploitation relié aux postes stationnaires de réception et de transmission, sans aucune action réciproque positive de la carte elle-même. Cela comporte entre autre, en certains cas, la nécessité de relier en réseau les différents postes stationnaires de réception et de transmission, et par conséquent l'inactivité totale ou partielle du système dans le cas d'une interruption de la liaison en réseau, ainsi que l'impossibilité pour le système stationnaire d'effectuer certaines opérations en temps réel pendant la période de communication avec la carte.

Le but principal de la présente invention est de perfectionner les cartes de réception et de transmission d'informations du genre indiqué, de sorte à rendre possible une action réciproque de ces cartes avec les postes stationnaires de réception et de transmission, dans le sens que les cartes ne se limitent plus à émettre les informations enregistrées lorsqu'elles en sont demandées, mais peuvent aussi recevoir et mettre en mémoire des informations complémentaires et, le cas échéant, élaborer les informations enregistrées, de sorte à pouvoir ensuite effectuer des actions réciproques avec les postes stationnaires de réception et de transmission, dans le sens de soumettre à ces postes non seulement les informations initialement reçues par la carte, mais aussi des informations ajoutées successivement ou/et élaborées par la carte elle-même.

Un autre but de l'invention est de réaliser une telle carte de réception et de transmission d'informations ayant une grande efficacité et, néanmoins, substantiellement simple et économique. Encore un but de l'invention est de réaliser une telle carte de réception et de transmission d'informations capable de réduire la consommation d'énergie et d'éviter tout trouble à des secours électroniques éventuellement installés sur les porteurs.

Encore un but de l'invention est de réaliser une telle carte de réception et de transmission d'informations susceptible d'être employée en des systèmes d'exploitation complexes et polyvalents, ainsi que de pouvoir réaliser de tels systèmes d'exploitation quine seraient pas autorisés par les cartes de réception et de transmission d'informations connues.

Ledit but principal est atteint, suivant la présente invention, en ce que la carte de réception et de transmission d'informations, comportant des moyens de mémoire et des moyens de communication par ondes électromagnétiques, comprend aussi un microprocesseur relié auxdits moyens de mémoire et auxdits moyens de communication, ainsi qu'une source d'énergie électrique pour l'alimentation desdits moyens de mémoire et de communication et dudit microprocesseur.

Du fait de ces caractéristiques, les moyens de mémoire de la carte peuvent être exploités d'une façon dymamique, en ce que la présence d'un microproresseur à bord de la carte, laquelle du fait de cette présence peut être définie comme intelligente, rend possible de recevoir des signaux spécifiques des postes stationnaires de réception et de transmission et., en fonction de ces signaux, d'ajouter des informations spécifiques aux informations déjà enregistrées dans la carte. Ces informations complémentaires, comme les informations initiales, pourront ensuite être lues et utilisées par un autre poste stationnaire de réception et de transmission. De cette façon, le transfert de certaines informations d'un poste stationnaire de réception et de transmission à un autre peut avoir lieu par le transport de ces informations de la part de la carte elle-même, sans dépendre d'une liaison en réseau des postes stationnaires de réception et de transmission. Ainsi on peut assurer un fonctionnement, tout au moins partiel, du système, aussi dans le cas de mauvais fonctionnement de la liaison en réseau des postes, ainsi que la possibilité de réactions en temps réel de la part du système stationnaire. De plus, la possibilité d'une élaboration, tout au moins élémentaire, des informations à l'intérieur de la carte elle-même, permet de réaliser des autres effets, par exemple une signalisation automatique aux postes stationnaires de réception et de transmission du fait qu'une carte, ayant dépassé sa période de validité ou bien le nombre d'utilisations admis, est échue; un fait quine pourrait pas être établi en temps réel, avec les conséquences qui en découlent, par les postes stationnaires de réception et de transmission, même si reliés en réseau.

De plus, le fait de pouvoir exploiter de façon dynamique et élaborer les informations à bord de la carte intelligente rend possibles plusieurs types d'actions réciproques avec les postes stationnaires de réception et de transmission, et donc l'utilisation de la carte en des systèmes d'exploitation de structures quine sont pas plus nécessairement simples mais qui peuvent être aussi complexes et polyvalentes. De ce fait, cette utilisation spécifique de la carte intelligente constitue elle-aussi une partie de la présente invention.

D'autres caractéristiques de l'invention sont exposées dans les revendications dépendantes.

Ces caractéristiques et autres, et les avantages des objets de l'invention, ressortiront plus clairement de la suivante description d'un mode de réalisation ayant le caractère d'un exemple non limitatif, représenté schématiquement dans les dessins annexés, dans lesquels:

Fig. 1 montre en vue de face un côté d'une carte avec circuit imprimé, destinée à constituer, avec des composants électroniques appliqués, une carte intelligente suivant l'invention;

Fig. 2 montre d'une façon similaire de la figure 1 le côté opposé de la carte avec circuit imprimé;

Fig. 3 montre un schéma à blocs des circuits de la carte intelligente suivant l'invention; et

Fig. 4 montre un schéma général des installations stationnaires destinées à agir réciproquement avec les cartes intelligentes suivant l'invention, dans une configuration possible donnée à titre d'exemple.

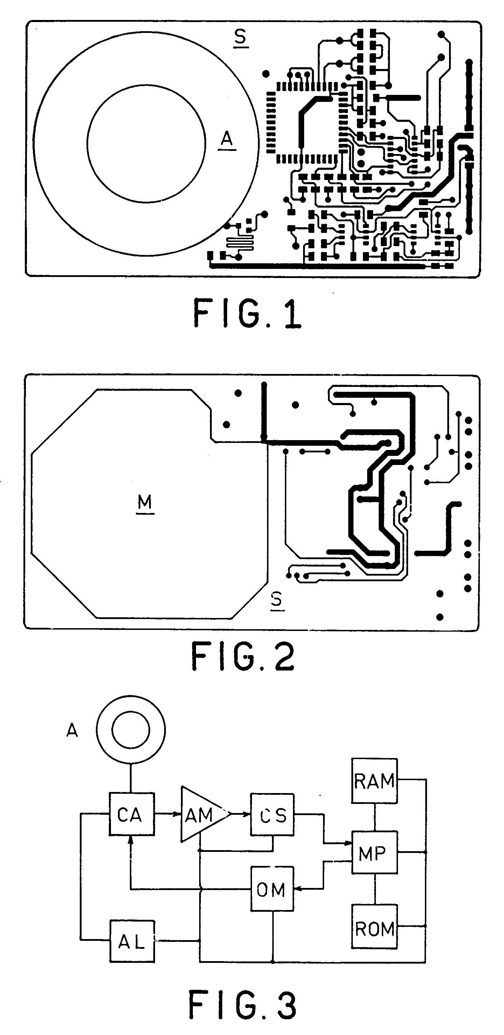

Une carte intelligente suivant l'invention comporte en général une carte S avec circuit imprimé, dont les deux côtés sont représentées dans les figures 1 et 2 respectivement. Le circuit imprimé sur la carte S comprend une pluralité d'emplacements pour la connexion de composants électroniques et une pluralité de pistes constituant les connexions électriques entre lesdits composants, et elle aboutit sur un côté de la carte à une surface A, qui dans cet exemple a la forme d'une région annulaire circulaire, constituant une antenne, et sur le côté opposé à une surface M, disposée en correspondance de l'antenne A et constituant une masse virtuelle. La forme et les dimensions de la surface A, l'épaisseur de la carte, la constante diélectrique du matériau constituant la carte et autres paramètres définissent la fréquence sur laquelle résulte accordée l'antenne A, fréquence qui, lors du projet, est choisie correspondante à la fréquence porteuse sur laquelle auront lieu les communications par ondes électromagnétiques entre la carte et le système stationnaire.

Faisant référence au schéma à blocs de la figure 3, on remarque que l'antenne A est reliée à un circuit accordé et démodulateur CA lequel, par un amplificateur AM, est relié à un circuit comparateur à seuil mobile CS et enfin à un microprocesseur MP constituant le composant plus caractéristique de la carte intelligente suivant l'invention. Le microprocesseur MP coopère avec un moyen de mémoire ROM de lecture seulement, comportant le système opératif qui contrôle le microprocesseur MP, et avec un moyen de mémoire RAM de lecture et d'écriture, destiné à enregistrer les informations relatives à la carte spécifique et donc à l'usager à laquelle celle-ci est délivrée. On doit comprendre que le moyen de mémoire de lecture et d'écriture indiqué en général par RAM n'est pas nécessairement une mémoire volatile et peut aussi comporter des éléments de mémoire permanente, par exemple du type EEPROM, destinés à recevoir les informations initiales qui doivent être conservées inchangées, tandis que les opérations d'écriture auront pour objet les informations complémentaires à ajouter ensuite dans une mémoire volatile faisant partie du moyen de mémoire RAM. Celui-ci représente, somme toute, les ressources relatives à l'usager, telles qu'elles sont emmagasinées à un certain moment dans la carte, incluant les informations initiales et les informations complémentaires successivement ajoutées aux informations initiales.

Le microprocesseur MP est aussi relié à un oscillateur modulé OM disposé pour contrôler le circuit accordé et démodulateur CA losqu'une information doit être transmise de la carte vers le système stationnaire. Enfin un circuit d'alimentation AL, constitué par une source d'énergie électrique telle qu'une pile, fournit l'énergie électrique nécessaire pour le fonctionnement des différents circuits de la carte qu'on a indiqué.

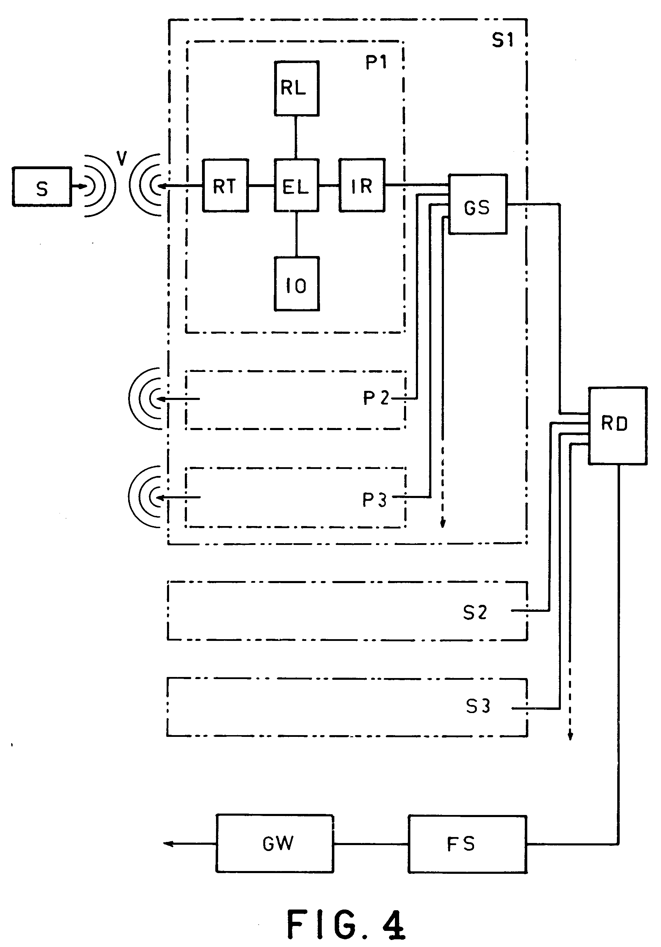

La carte S, qui porte les circuits imprimés et les composants appliqués qui matérialisent les blocs logiques qu'on a indiqué, peut être renfermée dans un étui destiné à être porté par un usager, dans la main ou appliqué au vêtement ou bien dans une poche, ou encore à être exposé de toute autre façon à l'action des ondes électromagnétiques émises par des postes stationnaires de réception et de transmission, dont le réseau constitue un système d'exploitation d'informations et dont un schéma logique général possible est représenté à titre d'exemple dans la fig. 4.

Le bloc RD désigne un réseau de données de liaison réciproque générale, aboutissant à une base de données ou file server FS comportant les ressources spécifiques du système, qui sont en commun pour routes les parties du système et dans ce sens sont générales. Le bloc FS garde les informations générales non indispensables pour le fonctionnement immédiat du système, range et exploite la production et l'archivage des données storiques, marginales ou de consultation occasionnelle. Cette base de données FS, à son tour, à travers une porte de communication GW, peut éventuellement faire recours aux ressources de bases de données ou de réseaux de données extérieurs.

Au réseau de données RD de liaison réciproque générale aboutissent plusieurs secteurs S1, S2, S3, ..., chacun desquels est responsable de l'exploitation des informations relatives à une aire logique spécifique. Chacun des secteurs peut être relié à travers le réseau RD de liaison réciproque générale, quand il est nécessaire, au file server FS, ou bien il peut dialoguer avec des autres secteurs. Faisant un exemple relatif à un système d'exploitation pour un centre polyvalent de services, indiqué seulement pour éclaircir une distribution logique possible des secteurs, on peut supposer que les différents secteurs soient affectés aux fonctions relatives: à la gestion du personnel, à la gestion des locaux de l'entreprise, à la gestion des activités culturelles, à la gestion des locaux de résidence, à la gestion des aires d'exposition, à la gestion des centres de congrès, à la gestion des parcs pour véhicules, et ainsi de suite. Bien entendu, cette configuration des secteurs est spécifique pour chaque application et elle est dictée par les exigences spécifiques de l'application.

Comme on l'a indiqué dans la figure 4 pour le secteur S1 seulement (les autres secteurs ayant des structures similaires), chaque secteur comprend un gérant de secteur GS auquel aboutissent plusieurs portes P1, P2, P3, ..., par lesquelles le gérant de secteur échange des informations en constituant un réseau de données qui relie les différentes portes. Le gérant de secteur GS comporte les informations, et contrôle les fonctions spécifiques, de l'aire logique correspondante au secteur considéré, et le cas échéant fait communiquer une porte avec le réseau de données de liaison réciproque RD. De plus, le gérant de secteur peu! activer ou désactiver les portes individuelles, ou bien en configurer à nouveau les fonctions, et il peut transférer des ensembles d'informations vers le réseau de données de liaison réciproque RD et, à travers ce dernier, au gérant d'un autre secteur ou bien au file server FS.

Chaque porte, parmi lesquelles seulement la porte P1 est représentée avec certains détails dans la figure 4 (les autres portes ayant une structure similaire), constitue une connexion entre le système stationnaire et les cartes intelligentes suivant l'invention. En général, chaque porte est active par rapport à un passage physique V à travers lequel peut passer chaque fois un porteur de carte S seulement, et cette porte a un rayon d'action limité dans lequel la porte peut établir la communication avec la carte intelligente. A cet effet la porte comprend un récepteur émetteur stationnaire RT, contrôlé par un élaborateur local EL qui, par une interface de réseau IR, communique avec le gérant GS de son propre secteur. De plus, l'élaborateur local communique avec un dispositif de mémoire RL comportant les ressources locales du système concernant la porte spécifique considérée, ainsi que les ressources générales qu'il est à propos de mettre à la disponibilité immédiate de la porte considérée. L'élaborateur local EL communique aussi avec un dispositif IO de input/output pour le contrôle des passages et pour iactivation d'avertissements ou d'autres actions en conséquence de tentatives possibles de violation du passage.

Dû à la présence du microprocesseur MP inclus dans la carte intelligente S, entre celui-ci et l'élaborateur local EL d'une porte par rapport à laquelle a été établie la communication par ondes électromagnétiques en correspondance du passage V, on peut établir une véritable séance de communication par échange d'ensembles de données. Si des raisons de sûreté l'imposent, cette communication peut avoir lieu avec intervention d'algorithmes cryptographiques. En outre, la présence du microprocesseur MP dans ta carte S autorise aussi une modificaton de la configuration, de sorte qu'à la demande du système stationnaire on peut modifier le code cryptographique ainsi que le protocol de transmission, ainsi réalisant un niveau ultérieur de sûreté.

Du fait de la présence d'une source intérieure AL d'énergie électrique, la mémoire propre RAM incluse dans chaque carte S peut être considérablement étendue, et donc la carte peut contenir de nombreuses informations sur le porteur, comprenant les informations introduites initialement pour définir, par exemple, les passages ou les horaires admis, et ainsi de suite, et les informations introduites successivement, par exemple pour le relèvement des passagges parcourus, pour le comptage des parcours ou des permanences en des régions à risque, et similaires.

Lorsque le signal modulé émis par le récepteur émetteur RT d'une porte, dans le rayon d'action de laquelle à l'intérieur du passage V se trouve la carte S, conduit à l'état d'excitation le circuit accordé constitué par l'antenne A, un signal se développant aux bouts d'une diode détectrice à seuil réduit est démodulé et amplifié, après quoi il est adressé au microprocesseur MP. Celui-ci, suivant les instructions qui le contrôlent, peut élaborer les données reçues et les enregistrer dans la mémoire, ensuite il produit à son tour des ensembles des données incluses dans la carte. Après changement de l'état du système de la carte et prédisposition du système pour la transmission, ces ensembles de données sont transmis au système stationnaire.

De préférence cette transmission n'est pas effectuée par l'irradiation d'une fréquence radio produite localement, mais en mode passif par interférence avec la fréquence porteuse qui arrive du système stationnaire, par modulation de la réflectivité de l'antenne. A cet effet la diode détectrice du circuit accordé est commutée alternativement entre les états d'interdiction et de conduction, en agissant par conséquent sur le rendement du circuit résonant d'entrée et, par rapport à l'extérieur, sur la réflectivité de l'antenne. Le récepteur émetteur RT de la porte stationnaire peut ainsi recevoir un signal différent dans les deux conditions différentes, et l'on peut ainsi réaliser une transmission passive de la carte vers la porte stationnaire.

Par ce moyen on évite de soumettre le porteur de la carte à des champs électromagnétiques relativement intenses qui pourraient interférer, par exemple, avec un pacemaker ou autre secours médical électronique installé sur le porteur. En employant le système de transmission passif indiqué ci-dessus on évite aussi de consommer des quantités excessives de l'énergie fournie par la source locale AL pour effectuer la transmission vers le système stationnaire, et cela permet d'augmenter l'autonomie de la carte.

D'autre côté, du fait de l'autonomie énergétique montrée par la carte grâce à la présence de la source AL, il n'est pas nécessaire que l'onde porteuse émise par le système stationnaire fournisse de l'énergie au système mobile. Par conséquent, aussi la transmission de la part du système fixe, qui a seulement le bout de transporter des informations, non pas de l'énergie, peut être limitée à des niveaux d'irradiation très réduits, ainsi excluant toute interférence avec des secours médicaux éventuellement installés sur les porteurs.

Comme on peut le remarquer, du fait que la carte intelligente suivant l'invention est capable d'emmagasiner des informations venant du système stationnare en agissant réciproquement avec les postes, et donc qu'elle est aussi capable de transporter des informations d'un poste à l'autre du système stationnaire, elle permet de dégager en partie le fonctionnement de ce dernier de sa dépendance d'un réseau. L'organisation hiérarchique décrite à titre d'exemple par rapport au système suivant la figure 4 autorise un fonctionnement autonome, tout au moins limité, des différentes portes comme P1, aussi dans le cas d'un mauvais fonctionnement momentané de leur liaison avec le gérant de secteur GS, et autorise aussi un fonctionnement autonome, tout au moins limité, des différents secteurs comme S1, aussi dans le cas d'un mauvais fonctionnement momentané de leur connection au réseau de liaison réciproque RD. Il est évident, de plus, que le système peut être configuré en tous cas à mesure des exigences de chaque application, et que sa configuration peut être facilement modifiée ou élargie en fonction des modifications éventuelles de ces exigences. En tous cas la présence de l'intelligence d'un microprocesseur et l'autonomie énergétique de la carte autorisent son utilisation en des systèmes d'exploitation complexes et polyvalents quine pourraient pas être desservis utilement par les cartes connues ayant un caractère statique par rapport aux informations enregistrées.

Bien entendu, les différentes modifications décrites et d'autres, et tout remplacement par des équivalents techniques, peuvent être portés à ce qu'on a décrit et montré à titre d'exemple, sans pour cela sortir du cadre de l'invention et du domaine du présent Brevet.

## Revendications

1. Carte (S) pour la réception et la transmission d'informations, comportant des moyens de mémoire (ROM) et des moyens (A,CA,CS,OM) de communication par ondes électromagnétiques, caractérisée en ce qu'elle comprend aussi un microprocesseur (MP) relié aux moyens de mémoire (ROM, RAM) et auxdits moyens de communication (A,CA,CS,OM) ainsi qu'une source d'énergie électrique (AL) pour l'alimentation desdits moyens de mémoire (ROM,RAM), desdits moyens de communication (CA,CS,OM) et dudit microprocesseur (MP).

2. Carte de réception et de transmission suivant la revendication 1, caractérisée en ce qu'elle comporte une carte (S) avec circuit imprimé comprenant, sur un côté de la carte, une surface conductrice (A) de forme substantiellement annulaire constituant une antenne, et sur le côté opposé de la carte une surface conductrice (M) disposée en correspondance de ladite antenne (A) et constituant une masse virtuelle, les dimensions et les proportions de la surface constituant l'antenne (A), l'épaisseur de la carte (S), sa constante diélectrique et les autres paramètres influents étant choisis de sorte que ladite antenne (A) soit résonant sur une fréquence correspondante à la fréquence porteuse choisie pour le fonctionnement desdits moyens de communication (CA,CS,OM).

3. Carte de réception et de transmission suivant la revendication 1, caractérisée en ce que son circuit comprend un moyen (A) constituant une antenne, un circuit accordé et démodulateur (CA) et un amplificateur successif (AM), reliés à ladite antenne (A) pour la réception de signaux d'un système stationnaire, et reliés audit microprocesseur (MP), des moyens de mémoire (ROM) de lecture seulement et des moyens de mémoire (RAM) de lecture et d'écriture reliés audit microprocesseur (MP), et un oscillateur modulé (OM) relié audit microprocesseur (MP) ainsi qu'audit circuit accordé et démodulateur (CA) pour la transmission de signaux vers ledit système stationnaire.

4. Carte de réception et de transmission suivant la revendication 3, caractérisée en ce qu'elle comprend en outre un comparateur à seuil mobile (CS) inséré entre ledit amplificateur (AM) et ledit microprocesseur (MP).

5. Carte de réception et de transmission suivant la revendication 3, caractérisée en ce que ledit oscillateur modulé (OM) et ledit circuit accordé et démodulateur (CA) coopèrent, pour la transmission de signaux vers le système stationnaire, dans le sens de modifier le rendement dudit circuit accordé (CA) et donc la réflectivité de ladite antenne (A), ainsi réalisant un système de transmission passive vers le système stationnaire.

6. Utilisation d'une carte de réception et de transmission suivant une quelconque des revendications 1 à 5, caractérisée en ce que la carte (S) est prédisposée pour coopérer avec une pluralité de portes (P1,P2, P3,...) disposées en correspondance de passages physiques (V), chaque porte comportant un récepteur émetteur (RT), un élaborateur local (EL) et une connexion avec autres portes.

7. Utilisation d'une carte de réception et de transission, suivant la revendication 6, caractérisée en ce que chacune desdites portes (P1,P2,P3,...) comprend en outre un moyen de mémoire (RL) emmagasinant les informations d'intérêt spécifique de la porte, et éventuellement des informations de caractère général pour leur accessibilité immédiate.

8. Utilisation d'une carte de réception et de transmission, suivant la revendication 6 ou 7, caractérisée en ce qu'une pluralité de portes (P1,P2,P3,...) est groupée en un secteur (S1,S2,S3,...) equippé avec un gérant de secteur (GS), et que plusieurs secteurs ainsi composés communiquent avec un réseau (RD) de liaison réciproque générale.

9. Utilisation d'une carte de réception et de transmission, suivant la revendication 8, caractérisée en ce que ledit réseau (RD) de liaison réciproque générale comporte une base de données générale (FS) pour le système et une porte de communication (GW) vers des réseaux de données ou des bases de données extérieurs.

10. Carte intelligente de réception et de transmission d'informations, et son utilisation dans un système d'exploitation de structures polyvalentes, caractérisés par les particularités, dispositions et fonctionnement, tels qu'ils réssortent de la description ci-dessus et des dessins annexés, ou remplacés par leurs équivalents techniques, pris dans leur ensemble, dans leurs différentes combinaisons ou séparément.

FIG.1

FIG.2

FIG.3

FIG. 4